# EUROPEAN PATENT SPECIFICATION

(11) **EP 0 424 050 B1**
(45) Date of publication and mention of the grant of the patent: **26.01.1994**
(21) Application number: 90311235.7
(22) Date of filing: 12.10.1990
(51) Int. Cl.: B60B 31/02, B23Q 7/10

(54) **Method and apparatus for inserting spokes into spoke-receiving holes in a flange of a hub**
Vorrichtung zum Einführen von Drahtspeichen in die Löcher einer Speichenradnabe
Dispositif pour insérer des rayons dans les trous d'un moyeu de roue à rayons

(30) Priority: 20.10.1989 JP 274452/89
(43) Date of publication of application: 24.04.1991
(73) Proprietor: ARAYA INDUSTRIAL CO., LTD., Chuoh-ku, Osaka (JP)
(72) Inventor: Hishikawa, Toshiharu, c/o Araya Industrial Co.Ltd., Nishiyodogawa-ku, Kansai (JP)
(74) Representative: Allam, Peter Clerk

(56) References cited:
- DE-A- 3 103 552
- FR-A- 2 153 077

## Description

The present invention relates to a method and apparatus for inserting spokes into spoke holes of hub flanges.

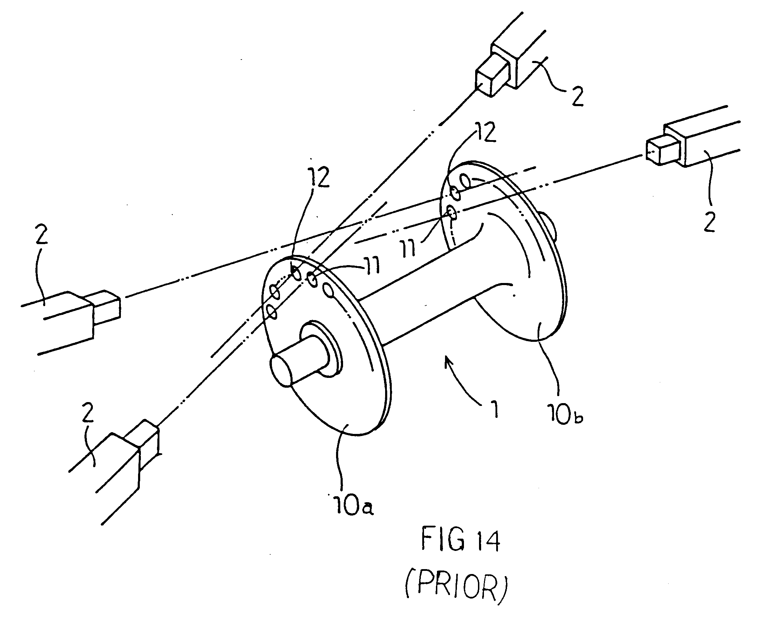

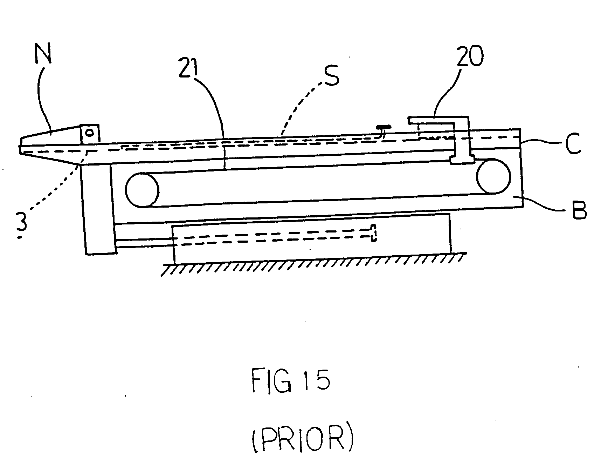

An example of the field of the invention is disclosed in U.S. Patent No. 4,538,332. The prior document is particularly concerned with inserting spokes into spoke holes provided in the flanges of a hub of a bicycle wheel. As disclosed therein the hub 1 is supported in a horizontal position. The procedure for threading spokes is illustrated in Figs. 14 and 15 attached hereto. As shown in Fig. 14, a spoke is inserted into the spoke holes 11, 12 of each flange 10a, 10b from spoke inserting devices 2 arranged respectively at both sides of the hub. Such spoke inserting devices 2 are mentioned in PCT Laid-Open Gazette No. WO/83/00032 (Japanese Patent Application Laid-Open Gazette No. Sho-58-50091) and are exemplified in Fig. 15 attached hereto.

In accordance with the above-stated prior art, a nozzle N and holder C are constructed in one body and an upwardly opening groove 3 is provided in said holder C. The groove 3 has a means to thread spokes and the holder C reciprocates on a base B as shown in Fig. 15. The spoke received in the groove 3 is removed from the rear end of the groove 3 toward the nozzle N and along the groove 3. Then, the holder C having the groove 3 is advanced from the base B through a specified stroke and stays there. Like this, the spoke S in the groove 3 automatically threads into the spoke hole in the time that the nozzle N is approaching towards the spoke hole. The said operation for setting position of the hub and said spoke threading operation are repeated thereafter until all the spoke holes are threaded. However, the prior art has the following problem. That is, the spoke-driving-forward means for threading the spoke, received in the groove 3, from the nozzle N into the spoke hole of one of the flanges of the hub takes the form of a shifting body 20 in the groove 3 and a driving mechanism for reciprocating the shifting body 20. Said driving mechanism is formed by a belt 21 winding between a pair of pulleys.

However, the speed of operation of the shifting body 20 is restricted, because of limitations in the shifting speed of the belt 21.

Another prior arrangement is shown in DE 3103552. Here, the head of each spoke, in turn, is engaged by the head of a piston, which adjusts the attitude of the spoke head into a suitable alignment. In order to achieve the latter function the piston is made rotatable in its cylinder about its longitudinal axis. The resultant freedom between the head of the spoke and the head of the piston gives rise to chattering between the spoke and the piston, preventing precise regulation.

The object of the present invention is to provide a method and an apparatus for inserting spokes into the spoke holes in the flange of the hub which is more speedy than was possible in the prior art.

Accordingly, the method for inserting a spoke into a spoke hole in a flange of a hub from a spoke-shooting-out device which is disposed facing the spoke hole, comprises receiving and holding the spoke in a spoke holding chamber arranged in the spoke-shooting-out device and aligned with the spoke hole, and shooting the spoke out of the spoke holding chamber into the spoke hole of the hub flange by pneumatic means. The method is characterised in that after the spoke is received into the spoke holding chamber the latter is closed to effectively seal it and then high pressure air is blown into the spoke holding chamber from one end thereof so as to propel the spoke out of the spoke holding chamber towards the spoke hole.

In this process, if the point end of the spoke does not exactly coincide with the position of the spoke hole, the spoke is easily and precisely inserted into the spoke hole because micro vibrations perpendicular to the shooting out direction are occurring in the spoke when the latter is shot out by pressure air. Such micro vibrations do not occur with the prior arrangements. By means of this method the spoke shooting operation can be made more speedy than in the case of the prior art, because pressure air shooting out the spokes moves the spokes rapidly.

The position of the spoke hole does not need to coincide precisely with the point end of the spoke; the spoke is precisely inserted into the spoke hole, because micro vibrations are occurring in the transverse direction thereof.

Apparatus according to one aspect of the invention includes a spoke-shooting-out device disposed to face a spoke hole of the hub flange and a holder containing a spoke chamber. The apparatus is characterised in that the said chamber comprises a groove in the holder for receiving the spoke and has a groove cover for opening and shutting the chamber, a groove cover driving device for opening the groove cover when the spoke is received and shutting the groove coverwhen the spoke is to be shot out, an air outlet for blowing out pressure air into the rear end of the chamber, a pressure-air control device for enabling the supply of pressure air to the chamber when groove cover is shut and nozzle means for shooting the spoke from the chamber into the spoke hole of the hub flange.

When, in the preferred embodiment of this apparatus, the spoke is received in the groove in the chamber and the cover shuts the opening to the groove, pressure air is blown in the chamber by operation of an air control means. The spoke is then shot out of the nozzle and the groove cover is reopened. A further spoke is received in the groove and the aforesaid operations are repeated.

In a further aspect of the invention there is provided a spoke-shooting-out device comprising a nozzle facing the spoke hole of the hub flange, an intermittently revolving cylindrical body arranged at the rear end of the nozzle mounted on a base and having spoke holding passages through the body at regular intervals along a circle coaxial with the revolving cylindrical body, a groove for receiving a spoke dropped from a spoke supplying device and including means for shifting a spoke from the groove into the spoke holding passage at the highest position of the revolving cylindrical body, and an air outlet formed in a cylindrical air body arranged at the rear end of the revolving cylindrical body for blowing out pressure air in the spoke holding passage rotated at the lowest position of the revolving cylindrical body.

The operation of the preferred embodiment of this aspect of the invention is as follows. The spoke is shot out by pressure air blown out of the air outlet when the spoke holding passage rotated to the lowest part of the revolving cylindrical body itself becomes coaxial with the nozzle and the air outlet. At that time, the spoke holding passage rotated to the highest part of the revolving cylindrical body becomes coaxial with the groove so that the spoke waiting in the groove is shifted to the spoke holding passage positioned at the highest part of the revolving cylindrical boby simultaneously with the spoke in the bottom spoke holding passage being shot out of the revolving cylindrical body. After that, the same operations are repeated.

This embodiment has the following advantages. At the same time one spoke is shot out of the position at the lowest part of the revolving cylindrical body into the nozzle, the other spoke is shifted to the spoke holding passage positioned at the highest part of the revolving cylindrical body. By this means the spoke shooting out operation is made continuous.

In yet a further aspect of the invention there is provided a spoke-shooting-out device comprising a nozzle, facing one of the spoke holes of the hub flange, for shooting the spoke into the spoke hole, an intermittently revolving cylindrical body contacting the rear end of the nozzle, the body having grooves at regular intervals around the cylindrical surface of the revolving cylindrical body, each groove being open at both ends for receiving and shooting a spoke and being held in a predetermined position for shooting out the spoke into the spoke hole, a cylindrical cover having an opening in its top part, said cover sealing the grooves of the revolving cylindrical body except the one at the top, the opening of the cylindrical cover exposing the groove rotated to the highest position of the revolving cylindrical body, a spoke feeding and spoke supplying device for supplying a spoke to the open groove exposed through the cover, and an air outlet formed in a cylindrical air body arranged at the rear end of the revolving cylindrical body for blowing pressure air into the groove rotated to the lowest position of the revolving cylindrical body. The operation of the preferred embodiment of this aspect of the invention is as follows. First of all, the spoke dropped on the chute of the spoke supplying device positioned just overhead of the revolving cylindrical body is received in the groove positioned at the highest part of the revolving cylindrical body and is held in the attitude suitable for being shot out from the nozzle. When the groove is rotated to the lowest part of the revolving cylindrical body, the groove becomes coaxial with the air outlet and the nozzle, and the spoke is shot out. When the spoke is shot out, the other spoke is received in the groove positioned at the highest part of the revolving cylindrical body. This has the advantage that space for the apparatus may be small compared with the previously described arrangement, because the spoke supplying device is arranged just overhead to the revolving cylindrical body.

Figure 1 is a diagrammatic view of an embodiment of a spoke-shooting-out device according to the invention;

Figure 2 shows a vertical and longitudinal section of a part of the device of Figure 1 containing a nozzle.

Figure 3 shows a side view of a part of the embodiment of Figure 1 containing a spoke-supplying chute.

Figure 4 shows a sketch of a groove provided in the spoke-shooting-out device of Figure 1.

Figures 4a, 4b show the manner by which a spoke having an attitude such that its head part is upside down is righted with its head uppermost, having been dropped from the chute into the groove.

Figure 5 shows V-V section of the groove illustrated in Figure 4.

Figure 6 shows VI-VI section of the groove illustrated in Figure 4.

Figure 7 shows VII-VII section of the groove illustrated in Figure 4.

Figure 8 shows a front view of the spoke-shooting-out device.

Figure 9 shows a flow chart of a computer circuit for controlling the spoke-shooting-out device.

Figure 10 shows a vertical and longitudinal section of a second embodiment of the present invention.

Figure 11 shows a perpendicular section of the revolving cylindrical body of the embodiment illustrated in Figure 10.

Figure 12 shows a vertical and longitudinal section of a third embodiment of a spoke-shooting-out device according to the invention.

Figure 13 shows a lateral section of the revolving cylindrical body of the embodiment illustrated in Figure 12.

Figure 14 shows a sketch of a prior published threading apparatus.

Figure 15 shows a longitudinal-section diagram of the spoke threading apparatus employed in Figure 14.

As previously noted, the present invention involves a method and an apparatus for inserting a spoke into a spoke hole of a hub flange.

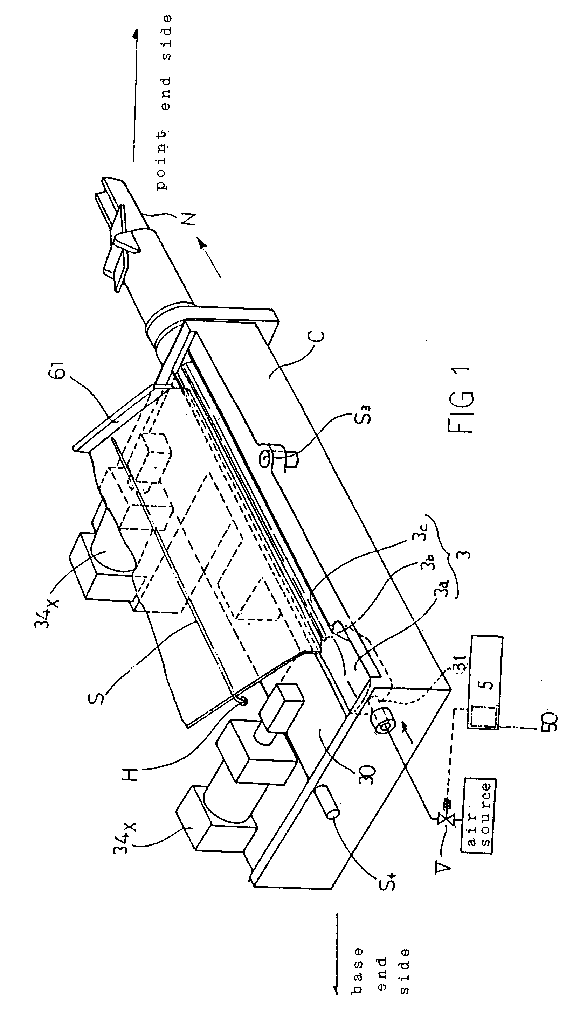

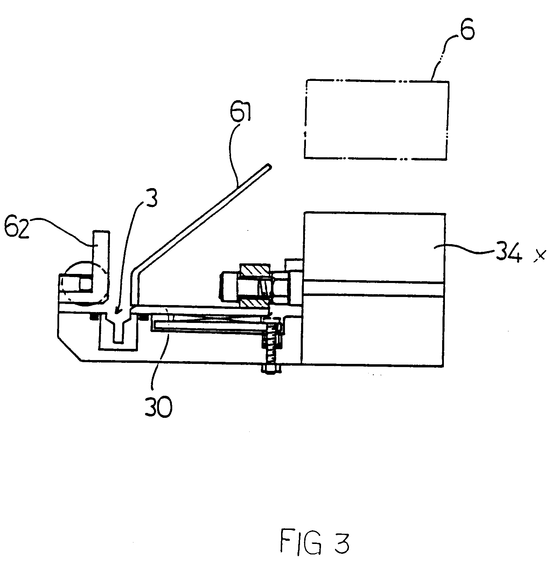

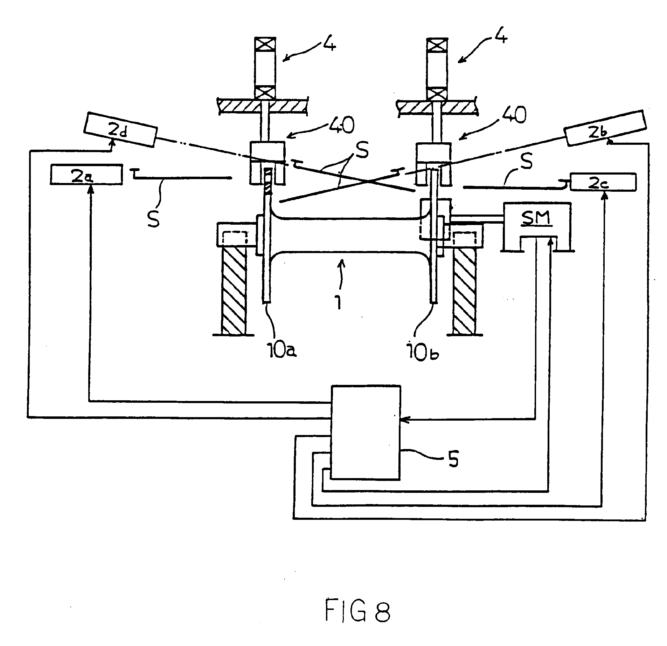

Hereinafter, a first embodiment as shown in Figs. 1-9 is described. Referring to Figure 8, first to fourth spoke-shooting-out devices 2a, 2b, 2c, 2d are arranged facing the spoke holes at outside of the hub 1 as in the prior art device illustrated in Figure 14. The hub is disposed horizontally and a first spoke is inserted into a spoke hole of the hub flange 10a from the first spoke-shooting-out device 2a arranged at left side of the hub 1 and a second spoke s is inserted into a spoke hole from the second spoke-shooting-out device 2b at right side of the hub 1. A third spoke s is inserted into the spoke hole of the hub flange 10a from the third spoke-shooting-out device 2c arranged at right side of the hub 1 and the fourth spoke is inserted into the spoke hole from the fourth spoke-shooting-out device 2d at left side of the hub 1. The spoke-shooting-out directions are arranged not to intercept each other and the spoke-shooting-out devices 2a, 2b, 2c, 2d are arranged so that the respective spoke shooting trajectory of each spoke-shooting-out device avoids the flange nearest to the device. Spokes are, thereby, respectively inserted into each spoke hole 11, 12 in suitable condition. It is necessary that the spoke shooting direction from the spoke-shooting-out device is aligned with the position of the spoke holes 11, 12.

In the course of the spoke inserting operation the hub 1 is revolved by a friction roller driven by means of a stepping motor SM controlled by the output signal of a spoke hole position detecting means 40. The motor indexes the hub so that the latter stops with the spoke holes 11, 12 coinciding with the trajectories of the spokes. The respective spoke hole position detecting means 40 are withdrawn to a predetermined position away from the detecting position by displacement means 4 prior to the insertion of the spokes into the spoke holes.

The spoke-shooting-out devices are described hereinafter in further detail. Each device comprises a holder (C) having a chamber. The latter comprises a groove (3) for receiving a spoke which groove extends along the length of the holder (C). At the rear end of the holder, furthest from the spoke holes of the hub (labelled "rear end side" in the Figures), the groove 3 widens from a slot portion 3c extending along most of the groove to curved side wall portions 3b and an open portion 3a. The said chamber is shut and opened by a groove cover 30 provided in the holder. On the holder, at the end of the groove 3 (labelled "point end side" in the Figures), remote from the portion 3a, slidable nozzle N is provided.
Nozzle N is supported by a connecting cylindrical body G mounted to the end of the holder C. Nozzle N is reciprocated along the connecting cylindrical body G by an air cylinder 38. Associated with the groove 3 is a chute 61, the bottom edge of which is to be aligned with the groove 3. The length of the groove 3 is greater than the length of a spoke s.

It is not necessary that the groove cover 30 perfectly seals the chamber opening when it is shut, but thrust-force for shooting-out the spoke s is increased with total sealing. The chute 61 is provided with an inclined plate for guiding the spokes s by their self-weight into the groove 3. The side width of the chute 61 is a little shorter than length of a spoke.

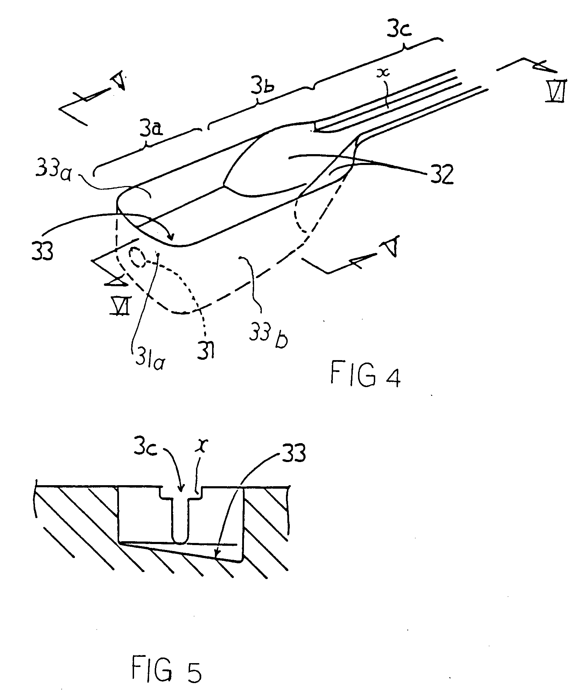

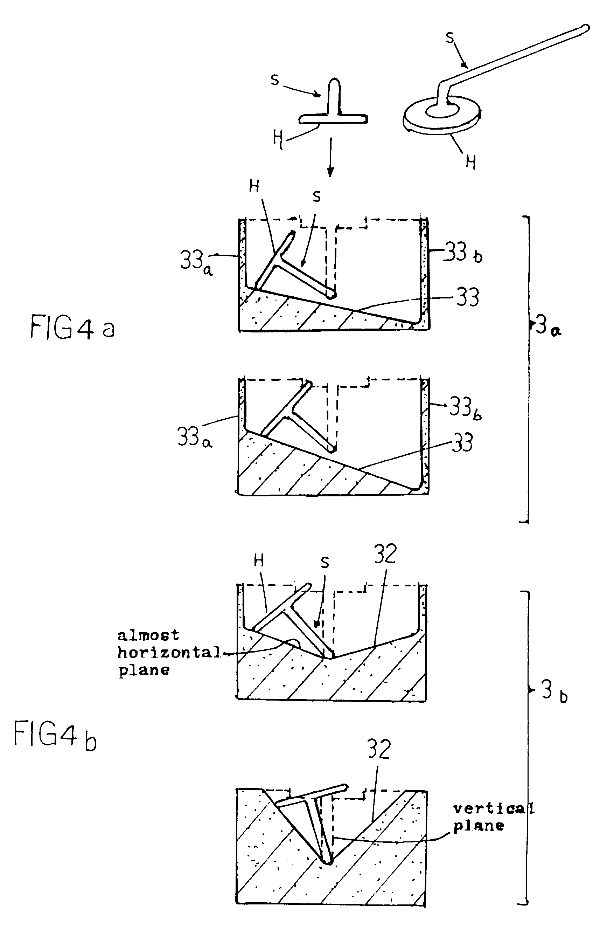

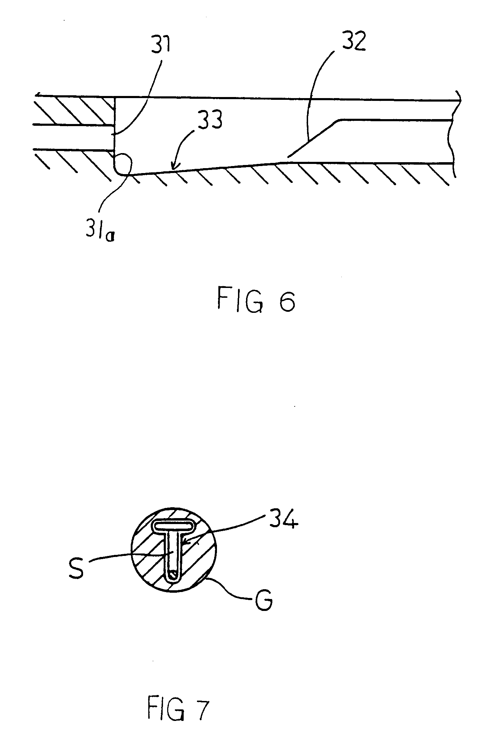

The groove 3 has first, second and third parts 3a, 3b, 3c as aforesaid. The third groove part 3c is formed as T shape, as shown in Figure 5, to receive a spoke with its head part H uppermost in the recess X. The second groove part 3b, as shown in Figure 4b, has both side walls 32, 32 forming upward inclined planes to the base. At the rear end (labelled "base end side" in Figure 1) the rear end of the opening of the inclined planes become almost horizontal as shown in Fig. 4, 4a.

Towards the front end of the widened portion 3a the side walls approach each other to define a pointed end and become vertical, as shown in Figure 4, 4a, 4b.

By the above construction, the side walls are smoothly curved from the horizontal plane to the vertical plane, the width of the first groove part 3a being larger than two times of the length of the head part H of the spoke s and the first groove part 3a being shaped as a rectangular dent or recess.

The bottom plane 33 of the first groove part 3a smoothly slopes down from the front end of the opening to a vertical rear end plane 31a and from one side wall 33a to the other side wall 33b as shown in Figure 5.

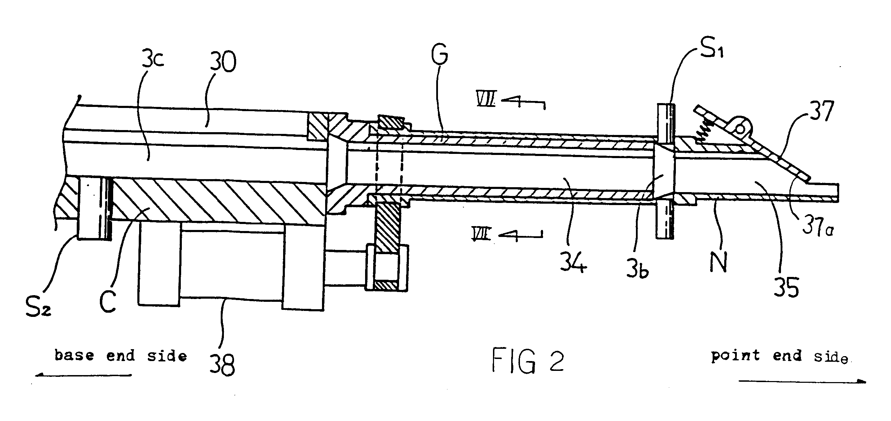

An air outlet 31 opens into the rear end plane 31a. The groove cover 30 formed by a rectangular plate reciprocates in a perpendicular direction with respect to the spoke shooting direction, being driven by a pair of air cylinders 34x. The cylindrical body G mounted on the end of the holder C facing the spoke holes defines an internal spoke passing hole 35 shown in cross section in Figure 7. Nozzle N comprises a sleeve portion which is slidable on the cylindrical body G and a portion which projects beyond the cylindrical body G and has an internal passage 35 having a cross-section shaped the same as said spoke passing hole 34. The upper end part of the nozzle N is cut away, being defined by an inclined plane 37a as shown in Figure 2. A pivoted covering plate 37 is mounted on the nozzle and is biased onto said inclined plane 37a to partially close the spoke passing hole 35 while leaving the lower part thereof open. The air cylinder 38 for reciprocating the nozzle N is mounted to the holder C. The nozzle N is advanced from a retracted position to a predetermined advanced position and stays at the advanced position when a hub 1 is set. In the advanced position the distance between the free end of the nozzle N and a respective flange 10a, 10b is smaller than the length of the spoke s. The nozzle N is retracted to the said retracted position after the spoke s is inserted into the spoke hole. After that, this operation is repeated for the next spoke hole.

As shown in Figure 1, an air valve v is inserted in a pneumatic circuit between an air source and air outlet 31. Valve V is controlled by control means 5 including an air control device 50. Air valve V also controls the air supplied to the air cylinder 38.

A sensor S₁ for detecting the passage of the spoke through the nozzle is positioned on the nozzle at the inlet plane of the nozzle passing hole 35. A sensor S₂ for detecting the presence of a spoke in the bottom of the groove 3 is provided in an aperture in the holder C which intercepts the groove 3. Sensors S₃ and S₄ are provided for detecting the shutter 30 in its respective closed and open conditions. The sensor S₁ outputs a signal to indicate that a spoke s has passed by said sensor S₁ within an appointed time. If that time elapsed without the signal being produced the spoke shooting operation is stopped.

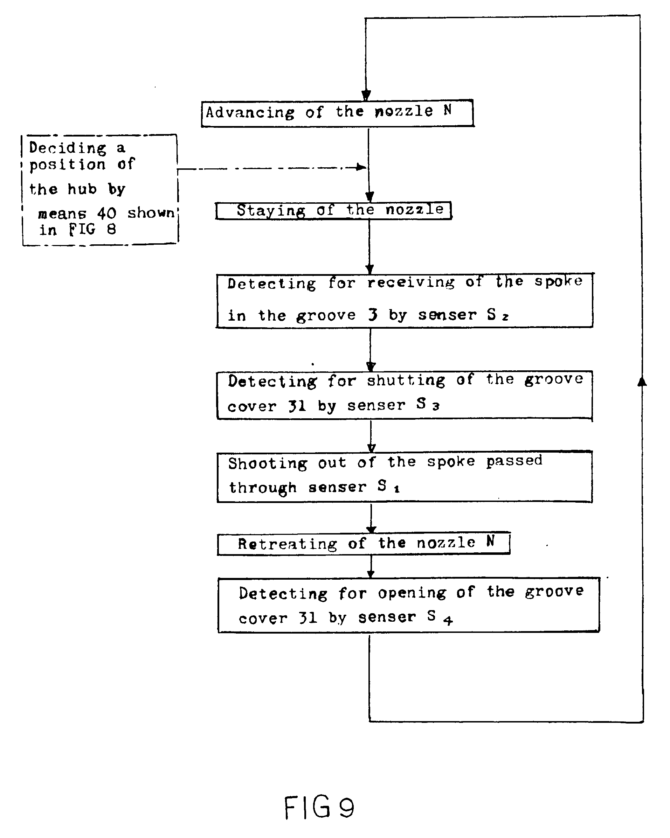

The air cylinders 34x, 38 are controlled by a micro computer. The control program of the micro computer, shown in Figure 9, has the following repeated operations. First of all, the nozzle N is advanced to its forward position by operating the air cylinder 38 and, at the same time, the hub 1 is stopped rotating at a predetermined position. Then the groove cover 30 is opened and remains open until a spoke is received in the groove 3 from the chute 61 of the spoke supplying device 6. When the spoke s is received in the groove 3 the cover 30 is shut, the air cylinder 34x being operated in response to the output signal of the sensor S₂. The air cylinder 34x is stopped by the output signal of the sensor S₃, which detects that the shutter is closed. After that, air is blown out from the air outlet 31 by operation of the valve V, the latter being opened as a consequence of the signal from sensor S₃.

So, the spoke s is shifted to the end of the nozzle N and then is shot out into the spoke hole of the hub flange 10a, 10b.

When the spoke has passed through the position of the sensor S₁ the groove cover 30 is retracted to its opening position from the shutting position by reverse driving the air cylinder 34. The valve V is closed when a signal is received from sensor S₄ indicating that the groove cover 30 is open. After the above process, the spoke inserting process is repeated for the next spoke hole in the hub.

In Figure 9, the dotted line refers to operation by the hub position deciding means. The hub position deciding means 40, as seen in Figure 8, is for detecting the fact that the positions of the nozzle N and the spoke hole are coincident and, when said means 40 detects the fact above-mentioned, the spoke inserting operation starts. The above-described step from the hub position deciding operation to the spoke inserting operation is repeated for each spoke hole.

In the present embodiment, the inclined plane bottom wall 33 of the first groove part 3a slopes down from one side wall 33a to the other side wall 33b and slopes down from the front to back of the widened portion of the groove 3, as above-mentioned. Consequently, if the spoke s drops on the plane bottom wall 33 in an upside-down attitude, as shown in Figure 4a, so that the head part H is directed downward, the head part H lies on the inclined plane bottom wall 33. The head part H is gradually uprighted as it moves along the surface of the plane bottom wall 33 as shown in Figure 4b. At the second groove part 3b, the head part H is guided by the side walls 32, 32 and continues to stand up as shown in Figure 4b. At the third groove part 3c, the head part H is put into the head-part recess x as shown in Figure 5. Thus the attitude of the spoke s is smoothly changed to the normal attitude in which the head part H is directed upward, as the spoke is thrust forward by air pressure.

The outlet of the nozzle N is reduced by the presence of the covering plate 37 pressed on the inclined plane 37a, so air pressure for shooting out the spoke s is sufficiently stored.

A guide plate 62 is disposed on the holder C at and facing the bottom end of the chute 61, so that a spoke s dropped onto the chute 61 is surely directed in the groove 3.

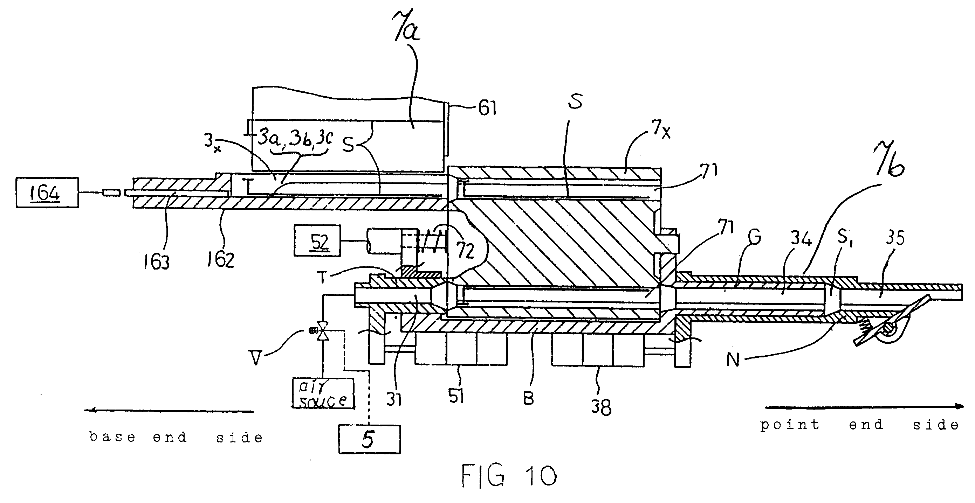

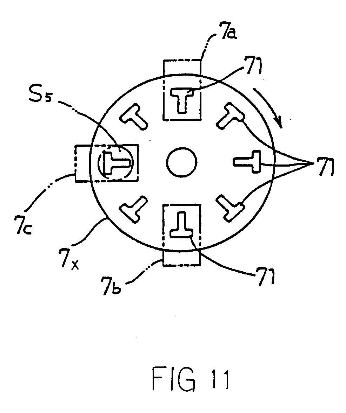

Figures 10 and 11 show a second embodiment of the present invention. The embodiment is characterised by an intermittently revolving cylindrical body 7x supported on a base B.

The axis of the revolving cylindrical body 7x is parallel to the spoke-shooting-out direction. The cylindrical body contains a plurality of spoke holding passages 71 distributed at regular intervals parallel to the-revolving cylindrical body's axis along a circle concentric with the revolving cylindrical body's axis. The cross-section of each spoke holding passage 71 is the same as the spoke passing hole 34 of the connecting cylindrical body G of the previously described embodiment, as shown in Figure 7.

Each spoke holding passage 71 holding a spoke is rotated to a position of the lowest part of the revolving cylindrical body 7x and faces to the air outlet 31 of a cylindrical air body T. The air outlet 31, the revolving cylindrical body 7x and the connecting cylindrical body G supporting nozzle N are mounted on a base B such that when a spoke s is shot out from the nozzle N, the air outlet 31, the spoke holding passage 71 positioned at the lowest part of the revolving cylindrical body 7x and the spoke passing hole 35 of the connecting cylindrical body G are all coaxial.

The revolving cylindrical body 7x is biased towards the near end of the connecting cylindrical body G, fixed to the base B, by a spring 72 disposed at the rear end of the revolving cylindrical body 7x.

The cylindrical air body T containing the air outlet 31 is mounted in the base B and is reciprocated by an air cylinder 51 fixed to the base B.

The revolving cylindrical body 7x is intermittently revolved by a stepping motor 52 and is stopped by the output of a revolving-body-position sensor S₅ (see Figure 11) which is positioned to face a spoke holding passage 71 not containing a spoke s for deciding the position of the revolving cylindrical body 7x. Thus, when the position of said spoke holding passage 71 and said sensor S₅ are just met, driving of the stepping motor 52 is stopped for an appointed time.

As shown in Figure 11, in every indexed position the revolving cylindrical body 7x has a spoke-receiving section 7a in the part containing the highest spoke holding passage 71, a spoke shooting section 7b position in the part containing the lowest spoke holding passage 71 and a revolving cylindrical body 7x position detecting section 7c positioned in the part between said spoke receiving section 7a and said spoke shooting section 7b. In registration with the spoke receiving section 7a, a spoke dropped from a chute 61 of a spoke supplying device 6 is received in a groove 3x which corresponds in shape with the groove 3 of the first embodiment and is provided on a fixed arm 162. An air cylinder 164 combined with a piston 163 is arranged at the base end of the fixed arm 162. The spoke received in the groove 3x is shifted to the spoke holding passage 71 of the revolving cylindrical body 7x by reciprocating of the piston 63.

Valve V, for supplying air to the air outlet 31, air cylinders 38, 51, 64 and the stepping motor 52, is operated by a predetermined timing program conditioned by the outputs of the spoke passing sensor S₁ and revolving-cylindrical-body-position sensor S₅.

The apparatus of the second embodiment is operated as follows. Before shooting out of the spoke, nozzle N is advanced to a predetermined advanced position from its retracted position and stays there. The spoke holding passages 71 are positioned as shown in Figure 11 with the spoke holding passage 71 at the lowest part of the revolving cylindrical body 7x, being coaxial with the air outlet 31 and the spoke passing hole 35 of the nozzle N. At that time, the cylindrical air body T is contacted to the revolving cylindrical body 7x by the reverse-driven air cylinder 51. After that, pressure air is blown into the spoke holding passage 71 from the air outlet 31 by opening of the valve V and the spoke s in the spoke holding passage 71 is shot out from the nozzle N into the spoke hole of the hub flange. After shooting out of the spoke s, the contact between the cylindrical air body T and revolving cylindrical body 7x is released by the normally-driven air cylinder, based on the output of the spoke passing sensor S₁, and at the same time the revolving cylindrical body 7x is revolved for one step by the operation of the stepping motor 52.

When, as a result of revolving the revolving cylindrical body 7x, the following spoke holding passage 71 is aligned with the position of the revolving body position sensor S₅, the stepping motor 52 is stopped by the output of the sensor S₅. Then, as the spoke holding passage 71 positioned at the highest part of the revolving cylindrical body 7x does not have the spoke s, the spoke received in the groove 3x is shifted into the spoke holding passage 71 by the piston 163 driven by the air cylinder 164. At the same time the spoke holding passage 71 positioned at the lowest part of the revolving cylindrical body 7x becomes coaxial with the air outlet 31 and the spoke contained therein is shot out. The above operations are made by a micro computer in a similar manner to that of the first-described embodiment.

The apparatus of the second embodiment has an advantage that the shooting-out of spokes is continuous. This is because the revolving cylindrical body 7x is intermittently revolved by the stepping motor 52 and each spoke s is shot out every one step of the stepping motor 52. Each time a spoke is shot out, a spoke in the groove 3x is shifted into the spoke holding passage 71 in registration therewith.

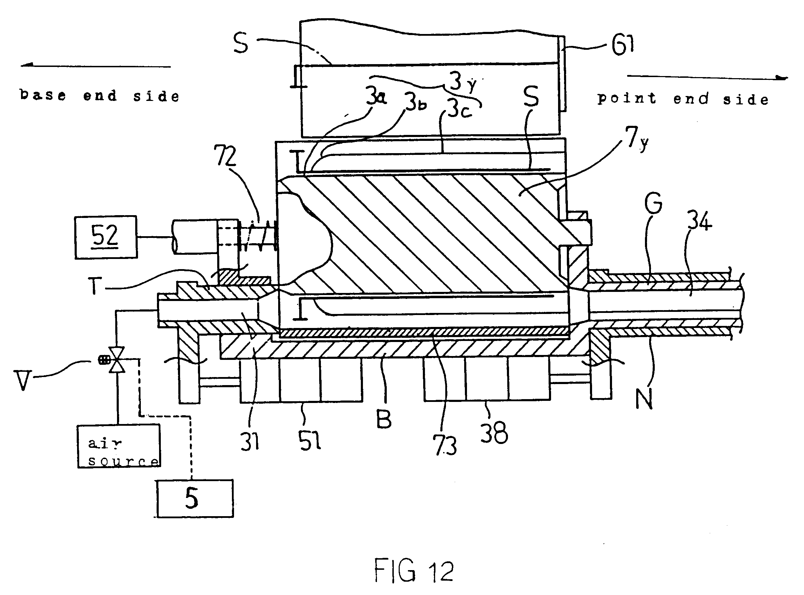

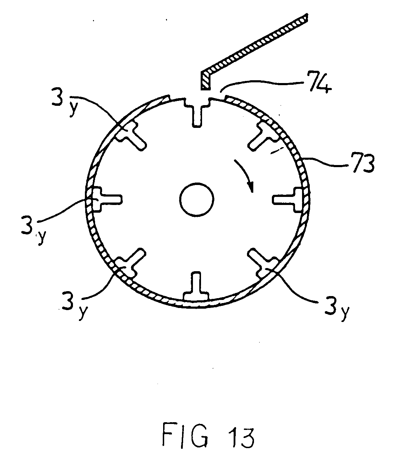

Figures 12 and 13 show a third embodiment of the invention, wherein spoke grooves 3y for receiving a spoke are formed by recessing the surface of an intermittently revolving cylindrical body 7y at regular positions around the circumference. The cylindrical surface of the revolving cylindrical body 7y is covered by a cylindrical cover 73 having an opening part 74 (see Figure 13). The revolving cylindrical body 7y revolves inside the cylindrical cover 73. The opening part 74 of the cylindrical cover 73 positioned at the top part of the revolving cylindrical body 7y faces the lowest part of the chute 61 of the spoke supplying device 6. The spoke supplying device 6 is similar to that of the first-described embodiment.

When the revolving cylindrical body 7y intermittently revolves and stops, the groove 3y positioned at the lowest part of the revolving cylindrical body 7y becomes coaxial with the air outlet 31, whilst the groove positioned at the highest part of the revolving cylindrical body 7y just corresponds with the opening part 74 of the cylindrical cover 73. Consequently, the groove 3 positioned at the highest part of the revolving cylindrical body 7y faces the chute 61. The timings of the spoke shooting out and spoke receiving operations are the same as in the second embodiment described hereinbefore.

The groove 3y has first to third groove parts 3a, 3b, 3c which are the same as in the first embodiment and as shown in Figures 4 to 6 but the third embodiment differs from the first embodiment in that both ends of the groove 3y are open in all positions except at the bottom of the revolving cylindrical body 7y. In this embodiment the spoke shooting out and spoke receiving operations are made at the same time as in the second embodiment.

## Claims

1. A method for inserting a spoke (s) into a spoke hole (12) in a flange (10a, 10b) of a hub (1) from a spoke-shooting-out device (2) which is disposed facing the spoke hole, comprising receiving and holding the spoke in a spoke holding chamber arranged in the spoke-shooting-out device and aligned with the spoke hole, and shooting the spoke out of the spoke holding chamber into the spoke hole of the hub flange by pneumatic means characterised in that after the spoke is received into the spoke holding chamber the latter is closed to effectively seal it and then high pressure air is blown into the spoke holding chamber from one end thereof so as to propel the spoke out of the spoke holding chamber towards the spoke hole.

2. Apparatus for inserting a spoke (s) into a spoke hole (12) in a flange (10a, 10b) of a hub (1) including a spoke-shooting-out device (2a, 2b, 2c or 2d) disposed to face the spoke hole and a holder (C) containing a spoke chamber characterised in that the chamber comprises a groove (3) in the holder for receiving the spoke and has a groove cover (30) for opening and shutting the chamber, a groove cover driving device (34) for opening the groove cover when the spoke is received and shutting the groove cover when the spoke is to be shot out, an air supply means (31) for blowing pressure air into the rear end of the chamber, a pressure-air control device (V, 50) for enabling the supply of pressure air to the chamber when the groove cover (30) is shut and a nozzle means (N) for shooting the spoke from the chamber into the spoke hole of the hub flange.

3. Apparatus according to Claim 2 further comprising an intermittently revolving cylindrical body (7x), arranged rearward of the rear end of the nozzle means (N), the revolving cylindrical body being mounted on a base between the nozzle means (N) and the holder (C) and having spoke holding passages (71) therethrough arranged at regular intervals along a circle coaxial with the revolving cylindrical body (7x), means (163, 164) for shifting a spoke from the groove (3x) for receiving a spoke into a spoke holding passage (71) at a first position around the axis of the revolving cylindrical body (7x), and an air outlet (31) formed in a cylindrical air body (T) arranged at the rear axial end of the revolving cylindrical body for blowing pressure air in a spoke holding passage (71) rotated to a second position around the axis of the revolving cylindrical body (7x).

4. Apparatus according to Claim 2 further comprising an intermittently revolving cylindrical body (7y) contacting the rear end of the nozzle means (N), the body having a plurality of grooves (3y) for receiving a spoke at regular intervals around the cylindrical outer surface of the revolving cylindrical body (7y) each groove (3y) being open for receiving and longitudinally shooting a spoke and being held in a predetermined position for shooting out the spoke into the spoke hole, a cylindrical cover (73) having an opening (74) in one part of its periphery, corresponding to a first position around the axis of the revolving cylindrical body (7y), said cover sealing all except one of the grooves (3y) of the revolving cylindrical body (7y), the opening (74) of the cylindrical cover exposing the groove (3y) rotated to a first position around the revolving cylindrical body, a spoke being fed to the open groove (3y) exposed through the cover, and an air outlet (31) formed in a cylindrical air body (T) arranged at a second position around the axis of the revolving cylindrical body (7y) for blowing pressure air into the groove (3y) rotated to the second position.

5. Apparatus according to Claim 2, 3 or 4, wherein the groove (3 or 3x or 3y) for receiving a spoke comprises a first part (3a) for receiving the head portion of the spoke and having a plane defining a bottom wall (33) which is sloped down from one side wall (33a) to the other side wall (33b) of the groove (3 or 3x or 3y) and from the forward end to the rear end thereof, a second groove part (3b) for guiding the head part of the spoke and having side walls (32) which incline from an almost horizontal plane at their rear end to vertical surfaces at their front end where they approach one another to define a pointed end to the groove (3 or 3x or 3y) and a third groove part (3c) for guiding the spoke with a predetermined attitude and having T shaped section containing a head part recess (x) for guiding the head part (H) of the spoke (s).

6. Apparatus according to Claim 3 or Claim 4, wherein the first position around the axis of the revolving cylindrical body (7x or 7y) is the top position thereof and the second position around the axis of the revolving cylindrical body (7x or 7y) is the bottom position thereof.

## Patentansprüche

1. Verfahren zum Einsetzen einer Speiche (S) in ein Speichenloch (12) in einen Flansch (10a, 10b) einer Nabe (1) von einer Speichenausschießvorrichtung (2), welche dem Speichenloch zugewandt angeordnet ist, umfassend das Aufnehmen und Halten der Speiche in einer Speichenhaltekammer, die in der Speichenausschießvorrichtung angeordnet und mit dem Speichenloch ausgerichtet ist, und das Ausschießen der Speiche aus der Speichenhaltekammer in das Speichenloch des Nabenflansches durch pneumatische Mittel,
dadurch gekennzeichnet,
daß, nachdem die Speiche in die Speichenhaltekammer aufgenommen ist, die letztere geschlossen wird, um sie wirksam abzudichten, und Hochdruckluft von ihrem einen Ende in die Speichenhaltekammer geblasen wird, um die Speiche aus der Speichenhaltekammer zu dem Speichenloch zu treiben.

2. Vorrichtung zum Einsetzen einer Speiche (S) in ein Speichenloch (12) in einem Flansch (10a, 10b) einer Nabe (1), mit einer Speichenausschießvorrichtung (2a, 2b, 2c oder 2d), die dem Speichenloch zugewandt angeordnet ist und einem Halter (C), der eine Speichenkammer enthält,
dadurch gekennzeichnet,
daß die Kammer eine Nut (3) in dem Halter aufweist, um die Speiche aufzunehmen, und eine Nutenabdeckung (30) hat, um die Kammer zu öffnen und zu schließen, eine Nutabdeckungsantriebsvorrichtung (34), um die Nutabdeckung zu öffnen, wenn die Speiche aufgenommen ist, und die Nutabdeckung zu schließen, wenn die Speiche ausgeschossen werden soll, ein Luftfördermittel (31) zum Blasen von Druckluft in das hintere Ende der Kammer, eine Druckluftsteuervorrichtung (V, 50), um die Versorgung der Kammer mit Druckluft zu ermöglichen, wenn die Nutabdeckung (30) geschlossen ist, und ein Düsenmittel (N), um die Speiche von der Kammer in das Speichenloch des Nabenflansches zu schießen.

3. Vorrichtung nach Anspruch 2, gekennzeichnet durch einen intermittierend drehenden zylindrischen Körper (7x) der hinter dem hinteren Ende des Düsenmittels (N) angeordnet ist, wobei der zylindrische Körper auf einer Basis zwischen dem Düsenmittel (N) und dem Halter (C) angeordnet ist und durchgehende Speichenhaltedurchgänge (71) aufweist, die in regelmäßigen Abständen entlang eines Kreises angeordnet sind, der koaxial mit dem drehenden zylindrischen Körper (7x) verläuft, Mittel (163, 164) zum Verschieben einer Speiche von der Nut (3x) um eine Speiche in einen Speichenhaltedurchgang (71) in einer ersten Stellung um die Achse des drehenden zylindrischen Körpers (7x) aufzunehmen, und einen Luftauslaß (31), der in einem zylindrischen Luftkörper (T) ausgebildet ist, der an dem hinteren axialen Ende des drehenden zylindrischen Körpers angeordnet ist, um Druckluft in einen Speichenhalterdurchgang (71) zu blasen, der in eine zweite Stellung um die Achse des drehenden zylindrischen Körpers (7x) gedreht ist.

4. Vorrichtung nach Anspruch 2, gekennzeichnet durch einen intermittierend drehenden zylindrischen Körper (7x), der das hintere Ende des Düsenmittels (N) berührt, wobei der Körper eine Vielzahl von Nuten (3y) aufweist, um in regelmäßigen Abständen um die zylindrische Außenfläche des drehenden zylindrischen Körpers (7y) eine Speiche aufzunehmen, wobei jede Nut (3y) offen ist zur Aufnahme und zum Ausschießen einer Speiche in Längsrichtung und in einer vorbestimmten Stellung gehalten ist, um die Speiche in das Speichenloch zu schießen, eine zylindrische Abdeckung (73) mit einer Öffnung (74) in einem Teil ihres Umfanges, welche einer ersten Stellung um die Achse des drehenden zylindrischen Körpers (7y) entspricht, wobei die Abdeckung alle Nuten (3y) des drehenden zylindrischen Körpers (7y) außer einer abdeckt, wobei die Öffnung (74) der zylindrischen Abdeckung die Nut (3y) freilegt, die in eine erste Stellung um den drehenden zylindrischen Körper gedreht ist, wobei eine Speiche in die offene Nut (3y) eingelegt ist, die durch die Abdeckung freigelegt ist, und einen Luftauslaß (31), der in einem zylindrischen Luftkörper (T) ausgebildet ist, der in einer zweiten Stellung um die Achse des drehenden zylindrischen Körpers (7y) angeordnet ist, um Druckluft in die Nut (3y) zu blasen, die in die zweite Stellung gedreht ist.

5. Vorrichtung nach Anspruch 2, 3 oder 4, dadurch gekennzeichnet, daß die Nut (3 oder 3x oder 3y) zum Aufnehmen einer Speiche einen ersten Teil (3a) aufweist, um den Kopfteil der Speiche aufzunehmen, und eine Ebene, die eine Bodenwand (33) bildet, die nach unten geneigt ist, von einer Seitenwand (33a) zu der anderen Seitenwand (33b) der Nut (3 oder 3x oder 3y) und von deren Vorderende zu deren Hinterende, einen zweiten Nutteil (3b) zum Führen des Kopfteils der Speiche, der Seitenwände (32) aufweist, die sich von einer fast horizontalen Ebene an ihren hinteren Enden zu vertikalen Flächen an ihren Vorderenden neigen, wo sie sich nähern und ein spitz zulaufendes Ende der Nut (3 oder 3x oder 3y) bilden, und einen dritten Nutteil (3c) zum Führen der Speiche mit einer vorbestimmten Haltung, der einen T-förmigen Abschnitt aufweist, der einen Kopfteilrezess (X) enthält, um den Kopfteil (H) der Speiche (S) zu führen.

6. Vorrichtung nach Anspruch 3 oder 4, dadurch gekennzeichnet, daß die erste Stellung um die Achse des drehenden zylindrischen Körpers (7x oder 7y) seine oberste Stellung ist und die zweite Stellung um die Achse des drehenden zylindrischen Körpers (7x oder 7y) seine unterste Stellung.

## Revendications

1. Procédé d'insertion d'un rayon (de rayons) dans un trou à rayon (12) ménagé dans un flasque (10a, 10b) d'un moyeu (1), à l'aide d'un pistolet (2) à rayons qui est placé en face du trou à rayon, comprenant la réception et le maintien du rayon dans une chambre de maintien de rayon prévue dans le pistolet à rayons et en alignement avec le trou à rayon, et la propulsion du rayon hors de la chambre de maintien de rayon dans le trou à rayon du flasque de moyeu grâce à des moyens pneumatiques, caractérisé en ce qu'une fois que le rayon est reçu dans la chambre de maintien de rayon, celle-ci est obturée pour la rendre réellement étanche et de l'air sous haute pression est ensuite introduit dans la chambre de maintien de rayon, par une des extrémités de celle-ci, afin de propulser le rayon hors de la chambre de maintien de rayon, en direction du trou à rayon.

2. Appareil permettant d'insérer un rayon (des rayons) dans un trou à rayon (12) ménagé dans un flasque (10a, 10b) d'un moyeu (1), comprenant un dispositif formant pistolet à rayons (2a, 2b, 2c ou 2d) disposé en face du trou à rayon et une cage (C) renfermant une chambre à rayons, caractérisé en ce que la chambre comprend une rainure (3) ménagée dans la cage, destinée à recevoir le rayon, et présente un couvercle (30) pour l'ouverture et la fermeture de la chambre, un dispositif d'entraînement du couvercle (34) destiné à ouvrir le couvercle lorsque le rayon est reçu et à fermer le couvercle lorsque le rayon doit être propulsé à l'extérieur, des moyens d'alimentation en air (31) destinés à introduire de l'air sous pression dans l'extrémité postérieure de la chambre, un dispositif de commande d'air sous pression (V, 50) permettant l'alimentation de la chambre en air sous pression lorsque le couvercle (30) est fermé, et une buse (N) destinée à propulser le rayon de la chambre dans le trou à rayon du flasque de moyeu.

3. Appareil selon la revendication 2, comprenant, en outre, un corps cylindrique (7x) tournant par intermittence, disposé à l'arrière de l'extrémité postérieure de la buse (N), le corps cylindrique rotatif étant monté sur une base entre la buse (N) et la cage (C) et possédant des passages (71) de maintien de rayons disposés à intervalles réguliers selon un cercle, de façon coaxiale au corps cylindrique rotatif (7x), des moyens (163, 164) permettant de déplacer un rayon hors de la rainure (3x) pour recevoir un rayon dans un passage de maintien de rayons (71), dans une première position autour de l'axe du corps cylindrique rotatif (7x), et une sortie d'air (31) ménagée dans un corps cylindrique à air (T) prévu à l'extrémité axiale postérieure du corps cylindrique rotatif, afin d'introduire de l'air sous pression dans un passage de maintien de rayons (71) qui a été amené à tourner dans une seconde position, autour de l'axe du corps cylindrique rotatif (7x).

4. Appareil selon la revendication 2, comprenant, en outre, un corps cylindrique (7y) tournant par intermittence, en contact avec l'extrémité postérieure de la buse (N), le corps présentant une pluralité de rainures (3y) destinées à recevoir un rayon à intervalles réguliers autour de la surface externe cylindrique du corps cylindrique rotatif (7y), chaque rainure (3y) étant ouverte pour recevoir et propulser, longitudinalement, un rayon et étant maintenue dans une position prédéterminée pour propulser le rayon dans le trou à rayon, un couvercle cylindrique (73) présentant une ouverture (74) dans une partie de sa périphérie, correspondant à une première position autour de l'axe du corps cylindrique rotatif (7y), ce couvercle obturant toutes les rainures (3y) du corps cylindrique rotatif (7y), à l'exception d'une, l'ouverture (74) du couvercle cylindrique laissant à découvert la rainure (3y) amenée à tourner dans une première position autour du corps cylindrique rotatif, un rayon étant introduit dans la rainure ouverte (3y), laissée à découvert par le couvercle, et une sortie d'air (31) formée dans un corps cylindrique à air (T) amené dans une seconde position autour de l'axe du corps cylindrique rotatif (7y) afin d'introduire de l'air sous pression dans la rainure (3y) qui a été amenée dans la deuxième position.

5. Appareil selon la revendication 2, 3 ou 4, dans lequel la rainure (3 ou 3x ou 3y) destinée à recevoir un rayon comprend une première partie (3a) destinée à recevoir la tête du rayon et dont le plan définit une paroi de fond (33) qui décrit une pente d'une paroi latérale (33a) vers l'autre paroi latérale (33b) de la rainure (3 ou 3x ou 3y) et de l'extrémité antérieure vers l'extrémité postérieure de celle-ci, une deuxième partie de rainure (3b) destinée à guider la tête du rayon et présentant des parois latérales (32) dont l'inclinaison part d'un plan presque horizontal, à leur extrémité postérieure, pour présenter des surfaces verticales à leur extrémité antérieure, où elles se rapprochent l'une de l'autre pour former une extrémité en pointe de la rainure (3 ou 3x ou 3y), et une troisième partie de rainure (3c) destinée à guider le rayon selon une orientation prédéterminée et présentant une section en forme de T contenant un creux (x) à tête destiné à guider la tête (H) du rayon (des rayons).

6. Appareil selon la revendication 3 ou la revendication 4, dans lequel la première position autour de l'axe du corps cylindrique rotatif (7x ou 7y) est la position au sommet de celui-ci et la seconde position autour de l'axe du corps cylindrique rotatif (7x ou 7y) est la position au fond de celui-ci.
